# EUROPEAN PATENT SPECIFICATION

(11) **EP 1 653 713 B1**
(45) Date of publication and mention of the grant of the patent: **11.08.2010**
(21) Application number: 05023431.9
(22) Date of filing: 26.10.2005
(51) Int. Cl.: H04M 1/02

(54) **Portable and foldable communication terminal**
Tragbares und klappbares Kommunikationsendgerät
Terminal de communication portable et pliable

(30) Priority: 26.10.2004 US 622524 P
(43) Date of publication of application: 03.05.2006
(73) Proprietor: Samsung Electronics Co., Ltd., Suwon-si, Gyeonggi-do (KR)
(72) Inventor: Kim, Young S., Los Altos, California 94024 (US)
(74) Representative: Grünecker, Kinkeldey, Stockmair & Schwanhäusser Anwaltssozietät

(56) References cited:
- JP-A- 2001 142 564
- US-A- 5 898 600
- US-A1- 2001 004 269
- US-A1- 2004 209 645

## Description

The present invention relates to a portable terminal including a DMB (Digital Media Broadcasting) phone, a game phone, a chatting phone, a camera phone, an MP3 phone, a cellular phone, a PCS, a PDA (Personal Digital Assistant), an HHP (Hand Held Phone), and the like, and more particularly to a portable communication terminal which can be conveniently used in various modes.

In general, a "portable communication device" refers to an electronic device that a user can carry to perform wireless communication with another device. To facilitate portability, designs of such portable communication devices tend not only to be compact, slim, and light, but are also incorporating multimedia functions. In particular, future portable communication devices are expected to incorporate greater multi-functionality and be capable of multipurpose utilization, as well as being more compact, light, and capable of being modified to be suitable for various multimedia or Internet environments. Additionally, portable communication devices are now commonly used throughout the world by people of all ages and walks of life, and are recognized by some people as a nearly indispensable commodity.

Portable communication devices may be classified into various categories according to their appearance, such as a bar-type portable communication device, a flip-type portable communication device, and a folder-type portable communication device. A bar-type portable communication device refers to a device having a single housing of a bar-shape. A flip-type portable communication device refers to a device in which a flip is rotatably mounted by a hinge unit to a housing. A folder-type communication device refers to manner in which a folder is rotatably connected by a hinge unit to a single bar-type housing.

Portable communication devices may also be classified into a necklace type portable communication device and a bracelet type portable communication device according to the position or the way in which users carries the portable communication devices. The necklace type portable communication device refers to a portable manner in which a terminal is worn around a neck of a user by using a string. Further, the bracelet type portable communication device refers to a portable manner in which a terminal is worn around the wrist of a user.

In addition, portable communication devices may be classified into a rotation-type portable communication device and a slide-type communication device, according to the manner of opening and closing the portable communication device. The rotation-type portable communication device refers to a manner in which two housings are rotatably connected. The slide-type communication device refers to a manner in which two housings are slid from each other in the lengthwise direction.

The foregoing classifications of the portable communication devices can be easily understood by those skilled in the art.

Conventional portable communication devices now tend to transmit data at a high speed in addition to performing the basic voice communication function. According to the increase in consumer demand, portable communication devices now tend to provide a service using a wireless communication technology capable of transmitting data at high speed.

Recent portable communication devices also tend to be equipped with a camera lens so as to obtain video signals for transmission. Current portable communication devices have an external or embedded camera lens module which enables users to perform video communication with desired partners or to photograph desired subjects.

However, since the conventional portable communication terminals mainly consider the convenience of a phone mode for voice communication, they are inconvenient in modes except for the phone mode, for example, a camera mode. For example, the convenience of photographing positions and angles is jeopardized.

Further, portable communication terminals are including more complex multimedia functions, and according to the trend, the camera modules thereof have higher resolutions and more extensive functions.

As the camera modules are made to have higher resolutions, the sizes of the modules themselves become larger. Since the camera modules include zoom-in and zoom-out functions, the bodies are difficult to be miniaturized and slimmed. Camera lens modules having high pixels, for example, i.e. more than two million to three million pixels, and zoom functions have predetermined thicknesses and thus require mounting spaces for the camera lens modules. Therefore, the mounting efficiencies of the camera lens modules are lowered and the appearances of the portable communication terminals are not appealing. As the size increases, the portability decreases.

US-A-5 898 600 discloses a portable information processing apparatus which comprises a first member, a second member, and a hinge member. The first member is provided with an information display unit and has an outer surface in which the information display unit is exposed. The second member is provided with an information input unit and has an outer surface in which the information input unit is exposed. The hinge member pivotally connects the first and second members with each other so that the first and second members can be pivotable between a portable position, where the first and second members overlap each other.

JP 2001 142 564 A discloses a device with an incorporated camera, the device consists of a main body unit, a display unit constituting a lid body, and a hinge block. The main body unit and the hinge block are connected rotatably to each other with a first hinge mechanism part. The display unit and the hinge block are connected rotatably to each other with a second hinge mechanism part. Thus, the device is formed to have a biaxial hinge structure where the display unit is rotatable from the state of covering the upper surface of the body unit to the state of being fitted to the lower surface of the main body unit, and the hinge block incorporates a camera unit.

US 2001/004269 A1 discloses a portable terminal having a portable TV telephone, a digital video camera, and a digital still camera. The portable terminal is formed by connecting a main unit and a flip unit having a monitor screen by a rotatable axial unit, comprises a first photographic lens housed in the axial unit in the longitudinal direction, and a second photographic lens provided at a predetermined position on the flip unit. The portable terminal is capable of changing the direction of the main unit and the flip unit to the suitable direction for executing the respective functions flexibly. Preferably, the flip unit has the second photographic lens on the side of the monitor screen, and the axial unit has a structure of closing both the units making inside surface of the main unit into contact with inside surface of the flip unit.

It is the object of the present invention to provide an improved communication terminal with a camera function.

This object is solved by the subject matter of the independent claims.

Preferred embodiments are defined by the dependent claims.

Accordingly, the present invention has been made to solve the above-mentioned problems occurring in the prior art, and an object of the present invention is to provide a portable communication terminal which is convenient to use in modes related to a camera function, for example, a subject photographing mode, a self-shot mode, and a moving image photographing mode, and in an e-mail transmitting mode and an Internet mode, as well as in a phone mode for voice communication and a data input mode.

Another object of the present invention is to provide a portable communication terminal including a camera module to miniaturize and slim the body.

Another object of the present invention is to provide a portable communication terminal improving the mounting and assembling efficiencies of a camera module having high resolution and various functions.

Another object of the present invention is to provide a portable communication terminal structurally suitable for the multimedia environment in which all of the functions for high resolution are integrated.

Another object of the present invention is to provide a portable communication terminal that incorporates multimedia functions, by connecting the body in parallel with the display section of the camera module so as to be close to or far away from each other, through a dual hinge rotational structure.

In order to accomplish these objects, there is provided a portable communication terminal that includes a camera module; a body having a plurality of keys, the body being rotatably connected to the camera module by a first hinge portion rotable about a first hinge axis; and a display section having a display unit, the display section being rotatably connected to the camera module by a second hinge portion about a second hinge axis parallel to the first hinge axis and rotatably connected to the camera module by the second hinge portion about a third hinge axis perpendicular to the second hinge axis.

### BRIEF DESCRIPTION OF THE DRAWINGS

The above and other objects, features, and advantages of the present invention will be more apparent from the following detailed description taken in conjunction with the accompanying drawings, in which:
FIG. 1 is a perspective view of a portable terminal according to the present invention;
FIG. 2 is a perspective view of a bottom portion of the portable terminal of FIG. 1;
FIG. 3 is a perspective view of a portable terminal according to the present invention, with a folder thereof completely opened;
FIG. 4 is a perspective view of a bottom portion of the portable terminal of FIG. 3;
FIG. 5 is a perspective view of a portable terminal according to the present invention, with a display section thereof completely rotated; and
FIG. 6 is another perspective view of the portable terminal of FIG. 5.

### DETAILED DESCRIPTION OF THE PREFERRED EMBODIMENT

Hereinafter, a preferred embodiment of the present invention will be described with reference to the accompanying drawings. In the following description of the present invention, a detailed description of known functions and configurations incorporated herein is omitted to avoid making the subject matter of the present invention unclear.

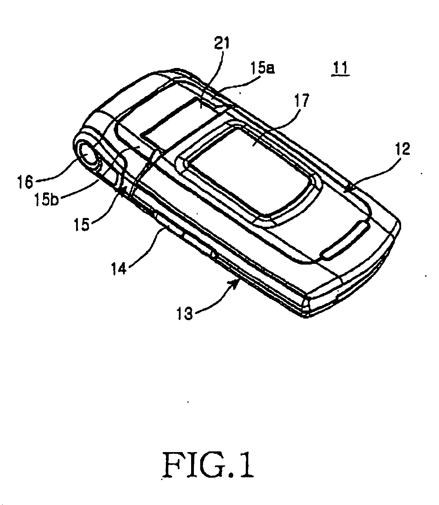

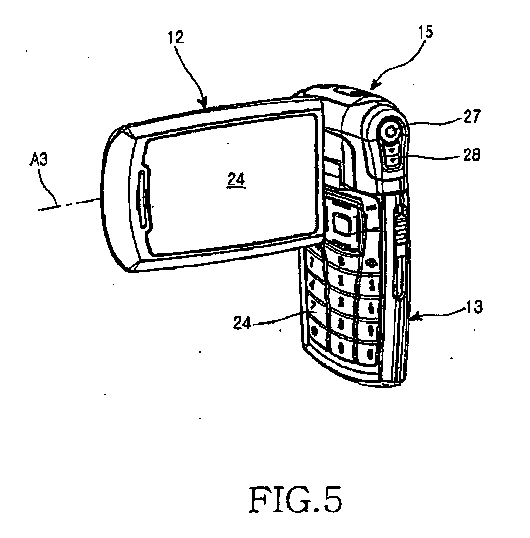

As shown in FIGs. 1 to 4, a portable communication terminal 11 according to the present invention includes a camera module 15, a body 13, and a display section 12. The body 13 includes a keypad 22 having a plurality of keys 24 and 25, and is rotatably connected to the camera module 15 about a first hinge axis A 1 by a first hinge portion 23. The display section 12 includes a main display unit 24 disposed on one side surface thereof and an auxiliary display unit 17 disposed on an opposite surface thereof, and is rotatably connected to the camera module 15 by a second hinge portion 21 about a second hinge axis A2 parallel to the first hinge axis A1, to be folded or unfolded to and from the body 13. Further, the display section 12 is rotatably connected by the second hinge portion 21 about a third hinge axis A3 (and as also shown in FIG. 5) perpendicular to the second hinge axis A2 to be rotated so as to be far away from the body 13, the display section 12 facing the body 13. The display section 12 opens and closes from and onto the upper surface of the body 13 on which the keys 24 and 25 are arranged. It is preferable that the main and auxiliary display units 24 and 17 include LCDs. The auxiliary display unit 17 displays data information which is to be confirmed often, for example, time, telephone number, the antenna reception sensitivity, an icon representing the residual amount of battery, an icon representing whether a message is received, and the like. In FIG. 1, the reference numeral 14 refers to a volume regulating key.

The camera module 15 includes a pair of connecting arms 15a and 15b for connecting the first and second hinge portions 23 and 21, with all of the first and second hinge portions 23 and 21 received therein. The first and second hinge portions 23 and 21 are received between the pair of connecting arms 15a and 15b and are connected to the camera module 15, to provide the first to third hinge axes A1 to A3. The first and second hinge portions 23 and 21 are rotated in a direction along which they are close to or far from each other, with the first and second hinge portions 23 and 21 received between the connecting arms 15a and 15b and opposed to each other. The body 13 is directly connected to the camera module 15 by the first hinge portion 23, and the display section is also directly connected to the camera section 15 by the second hinge portion 21. The reference numeral 16a indicates a lighting device.

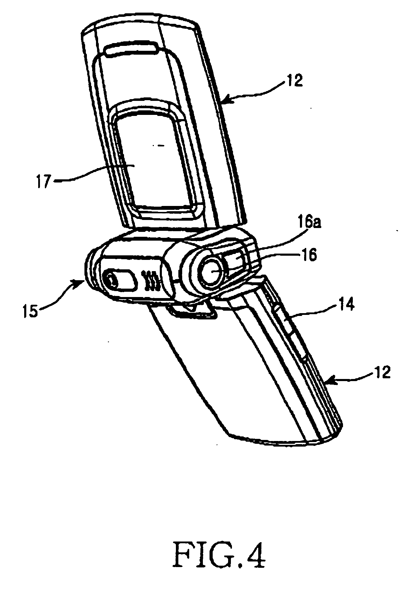

The first hinge portion 23 includes a center hinge arm integrally molded with the body 13 and is connected to the camera module 15 by a hinge module (not shown). Further, the second hinge portion 21 includes a rotary hinge arm assembled to the display section 12 and is connected to the camera module 15 by the rotary hinge module (not shown). The maximum rotation distance of the body 13 and the display section 12, which are connected to the camera module 15 by the first and second hinge portions 23 and 21, respectively, are restricted by the camera module 15. FIG. 4 shows a state in which the rotation distance of the body 13 and the display section 12 are restricted.

The plurality of keys are provided on the upper surface of the body 13, and the keys include number keys 24, a talking key, an end key, and a navigation key 25. A camera lens 16 is disposed at one end of the camera module 15 so as to be exposed, and a camera operation key 27 (shown in FIG. 5) is disposed at the opposite end of the camera module 15, and zoom keys 28 (shown in FIG. 5) are disposed adjacently to the camera operation key 27. The zoom keys 28 includes zoom-in and zoom-out functions.

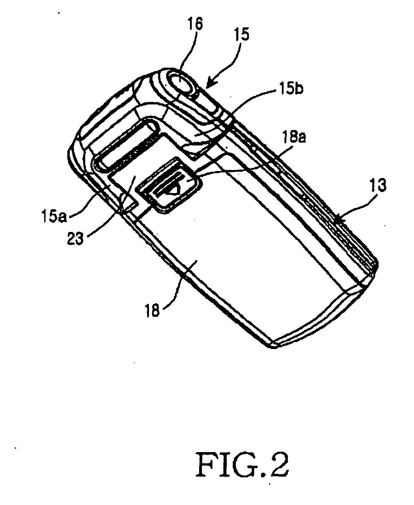

The reference numeral 18 of FIG. 2 represents a battery pack attached from the bottom surface of the body 13, and the reference numeral 18a represents a locking knob for attaching and detaching the battery pack.

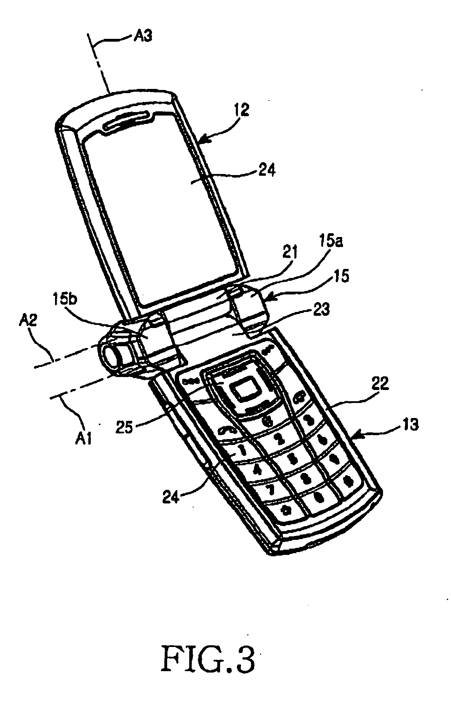

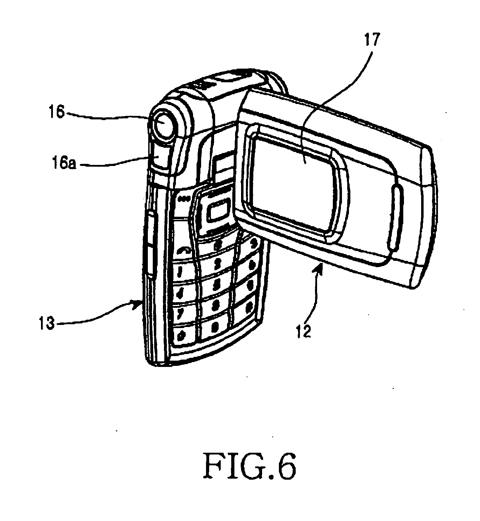

FIGs. 3 and 4 show the portable terminal used in a phone mode, an Internet mode, an e-mail mode, and FIGs. 5 and 6 shows the portable terminal used in various modes related to a camera mode, which include a subject photographing mode, a moving image photographing mode, a video talking mode, a self-shot mode, and the like.

In the state of FIGs. 5 and 6 in which the display section 12 is rotated by approximately ninety degrees about the second hinge axis A2 and then is rotated by approximately ninety degrees about the third hinge axis A3. A user can now direct the camera lens to face a subject and focus the camera lens. A user uses the camera module, viewing the main display unit 24 by which photographed data are displayed. In the state of FIG. 5, the body 13 functions as a grip portion.

As mentioned above, the present invention can easily function in the multimedia environment of high resolution and various functions, and can be conveniently used in camera-related modes, an e-mail transmitting mode, and an Internet mode, as well as a talking mode. Further, since the camera module having high resolution of many pixels and various functions and manufactured independently is assembled to the body, the body can be miniaturized and made slim, and the mounting and assembling efficiencies can be improved.

While the invention has been shown and described with reference to a certain preferred embodiment thereof, it will be understood by those skilled in the art that various changes in form and details may be made therein without departing from the scope of the invention as defined by the appended claims.

## Claims

1. A portable communication terminal (11), comprising:
a camera module (15), wherein a camera lens (16) is disposed at one of two opposite ends of the camera module;
a body (13) having a plurality of keys (24, 25) located thereon, the body being connected to the camera module by a first hinge portion (23) and rotatable about a first hinge axis (A1), and wherein the first hinge axis is parallel to an axis defined by the opposite ends of the camera module; and
a display section (12) having a display unit (24), the display section being connected to the camera module by a second hinge portion (21) and rotatable about a second hinge axis (A2) parallel to the first hinge axis, and connected to the camera module by the second hinge portion, wherein the first hinge axis is different than the second hinge axis,
wherein the display section is rotatable about a third hinge axis (A3) perpendicular to the second hinge axis,
the camera module (15) includes a pair of connecting arms for connecting the first and second hinge portions, with all the first and second hinge portions received therein,
the first hinge portion (23) includes a center hinge arm integrally molded with the body (13) so as to be connected to the camera module (15), and
the second hinge portion (21) includes a rotary hinge arm assembled onto the display section (12) to be connected to the camera module (15).

2. The portable communication terminal (11) according to claim 1, wherein the display section (12) includes a main display unit (24) disposed on one surface thereof and an auxiliary display unit (17) disposed on an opposite surface thereof.

3. The portable communication terminal (11) according to claim 1, wherein the camera module (15) comprises a camera operation key (27) and zoom keys (28) disposed at an end of the camera module that is opposite to the camera lens (16).

4. The portable communication terminal (11) according to claim 1, wherein the maximum rotatable distance of the body (13) and the display section (12) are restricted by the camera module (15).

5. The portable communication terminal (11) according to claim 1, wherein the first and second hinge portions face each other and are received in the camera module (15).

## Patentansprüche

1. Tragbares Kommunikations-Endgerät (11), das umfasst:
ein Kameramodul (15), wobei ein Kameraobjektiv (16) an einem von zwei einander gegenüberliegenden Enden des Kameramoduls angeordnet ist;
einen Körper (13), an dem sich eine Vielzahl von Tasten (24, 25) befinden, wobei der Körper über einen ersten Scharnierteil (23) mit dem Kameramodul verbunden ist und um eine Scharnierachse (A1) herum gedreht werden kann und die erste Scharnierachse parallel zu einer Achse ist, die durch die einander gegenüberliegenden Enden des Kameramoduls gebildet wird; und
einen Anzeigeabschnitt (12), der eine Anzeigeeinheit (24) aufweist, wobei der Anzeigeabschnitt mit dem Kameramodul über einen zweiten Scharnierteil (21) verbunden ist und eine zweite Scharnierachse (A2) parallel zu der ersten Scharnierachse herum gedreht werden kann und über den zweiten Scharnierteil mit dem Kameramodul verbunden ist, wobei sich die erste Scharnierachse von der zweiten Scharnierachse unterscheidet,
wobei der Anzeigeabschnitt um eine dritte Scharnierachse (A3) senkrecht zu der zweiten Scharnierachse herum gedreht werden kann,
das Kameramodul (15) ein Paar Verbindungsarme zum Verbinden des ersten und des zweiten Scharnierteils enthält, und sowohl der erste als auch der zweite Scharnierteil darin aufgenommen sind,
der erste Scharnierteil (23) einen mittleren Scharnierarm enthält, der integral so mit dem Körper (13) geformt ist, dass er mit dem Kameramodul (15) verbunden ist,
der zweite Scharnierteil (21) einen Dreh-Scharnierarm enthält, der so an dem Anzeigeabschnitt (12) montiert ist, dass er mit dem Kameramodul (15) verbunden ist.

2. Tragbares Kommunikations-Endgerät (11) nach Anspruch 1, wobei der Anzeigeabschnitt (12) eine Haupt-Anzeigeeinheit (24), die an einer Fläche desselben angeordnet ist, sowie eine Zusatz-Anzeigeeinheit (17) enthält, die an einer gegenüberliegenden Fläche desselben angeordnet ist.

3. Tragbares Kommunikations-Endgerät (11) nach Anspruch 1, wobei das Kameramodul (15) eine Kamerabetätigungstaste (27) und Zoom-Tasten (28) umfasst, die an einem Ende des Kameramoduls angeordnet sind, das dem Kameraobjektiv (16) gegenüberliegt.

4. Tragbares Kommunikations-Endgerät (11) nach Anspruch 1, wobei die maximale Drehdistanz des Körpers (13) und des Anzeigeabschnitts (12) durch das Kameramodul eingeschränkt wird.

5. Tragbares Kommunikations-Endgerät (11) nach Anspruch 1, wobei der erste und der zweite Scharnierteil einander zugewandt und in dem Kameramodul (15) aufgenommen sind.

## Revendications

1. Un terminal de communication portable (11), comprenant :
un module appareil photo (15), dans lequel un objectif d'appareil photo (16) est disposé à l'une des deux extrémités opposées du module appareil photo ;
un corps (13) présentant plusieurs touches (24, 25) à sa surface, le corps étant connecté au module appareil photo par une première partie de charnière (23) et orientable autour d'un premier axe de charnière (A1), et dans lequel le premier axe de charnière est parallèle à un axe défini par les extrémités opposées du module appareil photo ; et
une section d'affichage (12) présentant une unité d'affichage (24), la section d'affichage étant connectée au module appareil photo par une seconde partie de charnière (21) et étant orientable autour d'un deuxième axe de charnière (A2) parallèle au premier axe de charnière, et étant connecté au module appareil photo par la seconde partie de charnière, où le premier axe de charnière est différent du deuxième axe de charnière,
où la section d'affichage est orientable autour d'un troisième axe de charnière (A3) perpendiculaire au deuxième axe de charnière,
le module appareil photo (15) inclut une paire de bras de connexion pour connecter la première et la deuxième partie de charnière, la première et la deuxième partie de la charnière y étant reçues,
la première partie (23) inclut un bras de charnière central intégralement fondu avec le corps (13) de manière à être connecté au module appareil photo (15), et
la deuxième partie de charnière (21) inclut un bras de charnière rotatif assemblé sur la section d'affichage (12) à connecter au module appareil photo (15).

2. Le terminal de communication portable (11) selon la revendication 1, où la section d'affichage (12) inclut une unité d'affichage principale (24), disposée sur l'une de ses surfaces et une unité d'affichage auxiliaire (17), disposée sur sa surface opposée.

3. Le terminal de communication portable (11) selon la revendication 1, où le module appareil photo (15) comprend une touche d'exploitation de l'appareil photo (27) et des touches de zoom (28) disposées à une extrémité du module appareil photo étant opposée à l'objectif de la caméra (16).

4. Le terminal de communication portable (11) selon la revendication 1, où la distance de rotation maximale du corps (13) et la section d'affichage (12) sont restreintes par le module appareil photo (15).

5. Le terminal de communication portable (11) selon la revendication 1, où la première et la deuxième partie de charnière sont face à face et sont reçues dans le module appareil photo (15).
